# EUROPÄISCHE PATENTSCHRIFT

(11) **EP 1 226 749 B1**
(45) Veröffentlichungstag und Bekanntmachung des Hinweises auf die Patenterteilung: **15.04.2009**
(21) Anmeldenummer: 02001488.2
(22) Anmeldetag: 22.01.2002
(51) Int. Cl.: A01G 31/00

(54) **Verfahren zur Herstellung von Wasser aufnehmenden Faser-Produkten**
Method for manufacturing of water absorbing fibrous materials
Procédé de fabrication des matériaux fibreux absorbant de l'eau

(30) Priorität: 25.01.2001 DE 10103466
(43) Veröffentlichungstag der Anmeldung: 31.07.2002
(73) Patentinhaber: Rockwool International A/S, 2640 Hedehusene (DK)
(72) Erfinder: Napp, Walter, 47137 Duisburg (DE); Fricke, Peter, 47627 Kevelaer (DE)
(74) Vertreter: Barz, Peter

(56) Entgegenhaltungen:
- EP-A- 0 933 021
- WO-A-92/04824
- DE-A- 2 057 945
- DE-A- 3 627 236
- US-A- 4 240 817

## Beschreibung

Die Erfindung betrifft ein neues Verfahren zur Herstellung von Wasser aufnehmenden Faser-Produkten, bei denen die Benetzungsfähigkeit verbessert ist.

Wasser aufnehmende Mineralwoll-Produkte sind aus DE-A 2 057 945 oder WO 92/04824 bekannt. Es sind dies, wie bei üblichen Mineralwoll-Produkten, Netzwerke aus Mineralfasern, bei denen die Fasern an den Kreuzungspunkten miteinander durch Bindemittel derart verbunden sind, dass sie zusammenhängende, formstabile, poröse und elastische Produkte bilden. Diese werden für landwirtschaftliche und gärtnerische Zwecke verwandt. Insbesondere dienen sie als Bodenersatz bzw. Einbettmaterial zum Ziehen und Keimen von Samen, Schösslingen und Ablegern.

Bevorzugte Bindemittel für die Herstellung dieser Produkte sind Phenolharze. Zum Zweck der verbesserten Wasseraufnahme wird auf die Mineralfasern zusätzlich ein oberflächenaktives Mittel aufgebracht oder es wird eine Bindemittellösung eingesetzt, die ein oberflächenaktives Mittel enthält. Nach der Applikation und der Härtung der Harze, die in der Regel bei Temperaturen oberhalb von 200°C erfolgt, verbleibt das oberflächenaktive Mittel an der Oberfläche des Harzes und der Fasern und bewirkt so die hydrophilen und Wasser speichernden Eigenschaften der so hergestellten Mineralwoll-Produkte.

Obwohl diese Produkte bereits sehr gute Wasser aufnehmende Eigenschaften haben, besteht der Bedarf nach entsprechenden Mineralwoll-Produkten mit noch verbessertem hydrophilem Verhalten und gesteigerter Aufnahmefähigkeit für Wasser, um die darin großzuziehenden Pflanzen noch wirkungsvoller gegen ein etwaiges Vertrocknen zu schützen.

Es ist daher Aufgabe der vorliegenden Erfindung, die Herstellung von Wasser aufnehmenden Faser-Produkten zu ermöglichen, deren hydrophiles Verhalten und Aufnahmefähigkeit und Rückhaltefähigkeit von Wasser verbessert ist im Vergleich zu den entsprechenden bekannten Produkten, sowie die Bereitstellung entsprechend hergestellter Produkte.

Die Lösung der Aufgabe erfolgt durch ein Verfahren zur Herstellung von Wasser aufnehmenden Faser-Produkten gemäß der Ansprüche 1 bis 7, durch eine Bindemittellösung zur Durchführung des Verfahrens gemäß der Ansprüche 8 bis 11, sowie durch die nach dem Verfahren hergestellten Faser-Produkte, wie sie in Anspruch 12 beansprucht sind.

Es wurde gefunden, daß eine wesentliche Verbesserung des hydrophilen Verhaltens von mit Phenolharz gebundenen Mineralwoll-Produkten erreicht wird, wenn das Bindemittelgemisch außer dem Netzmittel noch einen aliphatischen Polyalkohol enthält. Die Benetzbarkeit und die Wasseraufnahme der entsprechend hergestellten Produkte werden erhöht, und die Wasserabgabe bei Trocknung verringert.

Dies ist insofern überraschend, als die bevorzugt eingesetzten aliphatischen Polyalkohole wie z.B. Ethylenglykol oder Trimethylolpropan bei der Härtung der Phenolharze entweder verdampfen oder sich zersetzen, so daß die fertigen Mineralwoll-Produkte weder im Harz noch auf den Mineralfasern Polyalkohole enthalten.

Da die aliphatischen Polyalkohole auch nicht in die Härtung des Phenolharzes eingreifen, ist der Mechanismus ihrer Wirkungsweise ungeklärt.

Die erfindungsgemäße Herstellung der Wasser aufnehmenden Mineralwoll-Produkte erfolgt in an sich bekannter Weise nach einer der folgenden Varianten:
- Die als Faservlies oder Fasergewebe oder bevorzugt in Form von Wirrfasern vorliegenden Mineralwollfasern werden zuerst in an sich bekannter Weise mit einer Netzmittellösung und danach mit einer Bindemittellösung benetzt, wobei die Bindemittellösung ein selbsthärtendes Phenolharz und einen Polyalkohol enthält. Nach dem Trocknen des Lösemittels oder der Lösemittel wird das mit Polyalkohol, Netz- und Bindemittel versehene Fasergebilde gegebenenfalls unter Formgebung auf Temperaturen bis zu 260°C erhitzt, wobei der Polyalkohol verdampft oder sich zersetzt und das Phenolharz, das sich bevorzugt an den Kreuzungspunkten der Mineralfasern befindet, härtet.
- Die als Faservlies oder Fasergewebe oder bevorzugt in Form von Wirrfasern vorliegenden Mineralwollfasern werden in an sich bekannter Weise mit einer Bindemittellösung benetzt, wobei die Bindemittellösung ein selbsthärtendes Phenolharz, ein Netzmittel und einen Polyalkohol enthält. Nach dem Trocknen des Lösemittels oder der Lösemittel wird das mit Polyalkohol, Netz- und Bindemittel versehene Fasergebilde gegebenenfalls unter Formgebung auf Temperaturen bis zu 260°C erhitzt, wobei der Polyalkohol verdampft oder sich zersetzt und das Phenolharz, das sich bevorzugt an den Kreuzungspunkten der Mineralfasern befindet, härtet.

Es wurde weiterhin gefunden, daß sich das erfindungsgemäße Verfahren auch bei anderen Fasern wie z. B. bei Glasfasern oder organischen Fasern, insbesondere Cellulosefasern anwenden läßt und daß die dabei erhaltenen Faser-Produkte sich ebenso für landwirtschaftliche und gärtnerische Zwecke wie z.B. als Bodenersatz bzw. Einbettmaterial zum Ziehen und Keimen von Samen, Schösslingen und Ablegern eignen wie die entsprechenden Mineralwoll-Produkte.

Bei Einsatz organischer Fasern ist allerdings zu beachten, daß die Härtung des Bindemittels nicht bei Temperaturen oberhalb deren Zersetzungs- oder Flammpunkt erfolgt.

Einsetzbare Netzmittel sind grenzflächenaktive Stoffe, die nicht phytotoxisch sind und sich nicht unterhalb der gewählten Härtungstemperatur zersetzen, ausgewählt aus Salzen höherer Fettsäuren, Alkyl- oder Aralkyl-sulfaten oder -sulfonaten, Fettalkoholsulfaten, Alkylphosphaten, Fettalkoholethoxylaten, Alkylphenolethoxylaten, Fettaminethoxylaten, Fettsäureethoxylaten, Alkylammoniumverbindungen und Alkylbenzolsulfonaten. Sie werden in der Regel in Form wässriger Lösungen eingesetzt in einer Menge von bis zu 3 Gew.%, bezogen auf das fertige Mineralwollprodukt bzw., sofern sie in der Phenolharzlösung eingesetzt werden, bis zu 20 Gew. %, vorzugsweise 5-20 Gew.%, bezogen auf das eingesetzte Phenolharz.

Die eingesetzten selbsthärtenden Phenolharze sind alkalisch kondensierte Produkte aus einer phenolischen Verbindung und einem Aldehyd, bevorzugt Kondensationsprodukte aus Phenol und Formaldehyd in einem molaren Verhältnis von 1 : 1,2 bis 1 : 4, bevorzugt im Verhältnis von 1: 3,1 bis 1 : 3,6. Die Phenolharze können mit Melamin oder Harnstoff modifiziert sein. Bevorzugt werden solche Harze, bei denen nach der Kondensation von Phenol mit Formaldehyd eine Nachkondensation mit Harnstoff erfolgt. Diese Harze sind im wesentlichen phenol- und formaldehydarm. Sie härten in der Wärme ohne Härtungskatalysator. In der Regel werden sie in Form wäßriger Lösung, gelegentlich auch in alkoholischer Lösung eingesetzt.

Die Menge des Bindemittels richtet sich nach der gewünschten Festigkeit des herzustellenden Mineralfaserproduktes. Sie liegt im allgemeinen im Bereich von 3 - 5 Gew.%, bezogen auf die eingesetzte Mineralwolle.

Einsetzbare Polyalkohole sind solche Verbindungen, die mindestens zwei alkoholische OH-Gruppen im Molekül enthalten. Beispiele hierfür sind Ethylenglycol, Propylenglycole, Trimethylolpropan, Pentaerythrit, Glycerin oder Zuckeralkohole wie z.B. Sorbit oder Inosit. Bevorzugt verwendet werden solche, die unterhalb der angewandten Härtungstemperatur verdampfen, wie Ethylenglycol, Propylenglycole oder Trimethylolpropan. Ihr Anteil im erfindungsgemäßen Bindemittel beträgt 3 bis 20 Gew.%, bevorzugt 4 bis 7 Gew.%, bezogen auf das eingesetzte Phenolharz.

Die Herstellung der erfindungsgemäß eingesetzten Bindemittellösungen erfolgt durch Lösen der einzelnen Komponenten in einem Lösemittel, bevorzugt in Wasser oder durch Vermischen von Lösungen der einzelnen Komponenten miteinander.

## Patentansprüche

1. Verfahren zur Herstellung von Wasser aufnehmenden Faser-Produkten durch Verbinden von Fasern miteinander mittels eines selbsthärtenden Phenolharzes und unter Einwirkung eines Netzmittels, **dadurch gekennzeichnet, dass** das Netzmittel ausgewählt wird aus den Salzen höherer Fettsäuren, Alkyl- oder Aralkylsulfaten oder -sulfonaten, Fettalkoholsulfaten, Alkylphosphaten, Fettalkoholethoxylaten, Alkylphenolethoxylaten, Fettaminethoxylaten, Fettsäureethoxylaten, Alkylammoniumverbindungen oder Alkylbenzolsulfonaten, und die Bindemittellösung ein selbsthärtendes Phenolharz und einen Polyalkohol enthält.

2. Verfahren nach Anspruch1, **dadurch gekennzeichnet, dass** die Bindemittellösung Glycol enthält.

3. Verfahren nach Anspruch 1 und 2, **dadurch gekennzeichnet, dass** als Phenolharz ein Kondensationsprodukt aus Phenol und Formaldehyd in einem molaren Verhältnis von 1 : 1,2 bis 1 : 4 verwendet wird.

4. Verfahren nach Anspruch 3, **dadurch gekennzeichnet, dass** als Phenolharz ein Kondensationsprodukt aus Phenol und Formaldehyd in einem molaren Verhältnis von 1 : 3,1 bis 1 : 3,6 verwendet wird.

5. Verfahren nach einem oder mehreren der Ansprüche 1 bis 4, **dadurch gekennzeichnet, dass** eine Bindemittellösung verwendet wird, die zusätzlich das Netzmittel enthält.

6. Verfahren nach einem oder mehreren der Ansprüche 1 bis 5, **dadurch gekennzeichnet, dass** als Fasern Glas- oder Mineralfasern verwendet werden.

7. Verfahren nach einem oder mehreren der Ansprüche 1 bis 5, **dadurch gekennzeichnet, dass** als Fasern Cellulosefasern verwendet werden.

8. Bindemittellösung zur Herstellung von Wasser aufnehmenden Faser-Produkten entsprechend der Verfahren gemäß einem oder mehreren der Ansprüche 1 bis 7, **dadurch gekennzeichnet, dass** sie eine wässrige Lösung eines selbsthärtenden Phenolharzes ist, die 3 - 20 Gew.%, bezogen auf das Phenolharz, eines Polyalkohols und ein Netzmittel ausgewählt aus den Salzen höherer Fettsäuren, alkyl- oder Aralkylsulfaten oder -sulfonaten, Fettalkoholsulfaten, Alkylphosphaten, Fettalkoholethoxylaten, Alkylphenolethoxylaten, Fettaminethoxylaten, Fettsäureethoxylaten, Alkylammoniumverbindungen oder Alkylbenzolsulfonaten enthält.

9. Bindemittellösung nach Anspruch 8, **dadurch gekennzeichnet, dass** sie das Netzmittel in einer Menge von 5 - 20 Gew%, bezogen auf das Phenolharz, enthält.

10. Bindemittellösung nach Anspruch 8 und 9, **dadurch gekennzeichnet, dass** sie als Phenolharz ein Kondensationsprodukt aus Phenol und Formaldehyd in einem molaren Verhältnis von 1 : 3,1 bis 1 : 3,6 enthält.

11. Bindemittellösung nach den Ansprüchen 8 bis 10, **dadurch gekennzeichnet, dass** das Phenolharz mit Harnstoff modifiziert ist.

12. Wasser aufnehmende Faser-Produkte, hergestellt nach einem Verfahren gemäß einem oder mehreren der Ansprüche 1 bis 7.

## Claims

1. A process for producing water-absorbing fibre products by bonding fibres to each other by means of a self-curing phenolic resin and exposure to a wetting agent, **characterized in that** the wetting agent is selected from the salts of higher fatty acids, alkyl or aralkyl sulfates or sulfonates, fatty alcohol sulfates, alkyl phosphates, fatty alcohol ethoxylates, alkyl phenol ethoxylates, fatty amine ethoxylates, fatty acid ethoxylates, alkyl ammonium compounds or alkyl benzene sulfonates, and that the binder solution contains a self-curing phenolic resin and a polyalcohol.

2. The process as claimed in claim 1, **characterized in that** the binder solution contains glycol.

3. The process as claimed in claims 1 and 2, **characterized in that** a condensation product of phenol and formaldehyde in a molar ratio from 1 : 1.2 to 1 : 4 is used as the phenolic acid.

4. The process as claimed in claim 3, **characterized in that** a condensation product of phenol and formaldehyde in a molar ratio from 1 : 3.1 to 1 : 3.6 is used as the phenolic acid.

5. The process as claimed in one or more of claims 1 to 4, **characterized in that** a binder solution is used that additionally contains the wetting agent.

6. The process as claimed in one or more of claims 1 to 5, **characterized in that** glass fibres or mineral fibres are used as fibres.

7. The process as claimed in one or more of claims 1 to 5, **characterized in that** cellulose fibres are used as fibres.

8. A binder solution for producing water-absorbing fibre products according to the process as claimed in one or more of claims 1 to 7, **characterized in that** it is an aqueous solution of a self-curing phenolic acid containing, relative to the phenolic resin, 3 - 20 % by weight of a polyalcohol, and a wetting agent selected from the salts of higher fatty acids, alkyl or aralkyl sulfates or sulfonates, fatty alcohol sulfates, alkyl phosphates, fatty alcohol ethoxylates, alkyl phenol ethoxylates, fatty amine ethoxylates, fatty acid ethoxylates, alkyl ammonium compounds or alkyl benzene sulfonates.

9. The binder solution as claimed in claim 8, **characterized by** containing the wetting agent at an amount of 5 - 20 % by weight relative to the phenolic resin.

10. The binder solution as claimed in claims 8 and 9, **characterized by** containing a condensation product of phenol and formaldehyde in a molar ratio of 1 : 3.1 to 1 : 3.6 as the phenolic resin.

11. The binder solution as claimed in claims 8 to 10, **characterized in that** the phenolic resin is modified with urea.

12. Water-absorbing fibre products producted according to a process as claimed in one or more of claims 1 to 7.

## Revendications

1. Procédé de fabrication de produits fibreux hydrorétenteurs par liaison de fibres entre elles moyennant une résine phénolique auto-durcissante et sous l'action d'un agent mouillant, **caractérisé en ce que** l'agent mouillant est choisi parmi les sels d'acides gras supérieurs, de sulfates ou sulfonates d'alkyle ou d'aryle, de sulfates d'alcool gras, de phosphates d'alkyle, d'éthoxylates d'alcool gras, d'éthoxylates d'alkylphénol, d'éthoxylates d'amine grasse, d'éthoxylates d'acide gras, de liaisons d'alkylammonium ou de sulfonates d'alkylbenzole, et **en ce que** la solution de liant contient une résine phénolique auto-durcissante et un polyalcool.

2. Procédé selon la revendication 1, **caractérisé en ce que** la solution de liant contient du glycol.

3. Procédé selon les revendications 1 et 2, **caractérisé en ce qu'**un produit de condensation du phénol et du formaldéhyde dans un rapport molaire de 1 : 1,2 à 1 : 4 est utilisé en tant que résine phénolique.

4. Procédé selon la revendication 3, **caractérisé en ce qu'**un produit de condensation du phénol et du formaldéhyde dans un rapport molaire de 1 : 3,1 à 1 : 3,6 est utilisé en tant que résine phénolique.

5. Procédé selon l'une ou plusieurs des revendications 1 à 4, **caractérisé en ce qu'**il comporte l'utilisation d'une solution de liant qui contient en outre l'agent mouillé.

6. Procédé selon l'une ou plusieurs des revendications 1 à 5, **caractérisé en ce que**, en tant que fibres, des fibres de verre ou des fibres minérales sont utilisées.

7. Procédé selon l'une ou plusieurs des revendications 1 à 5, **caractérisé en ce que** des fibres cellulosiques sont utilisées en tant que les fibres.

8. Solution de liant pour la fabrication de produits fibreux hydrorétenteurs conformément aux procédés de l'une ou plusieurs des revendications 1 à 7, **caractérisée en ce qu'**elle est une solution aqueuse d'une résine phénolique auto-durcissante, qui contient 3 à 20 % en poids, relativement à la résine phénolique, d'un polyalcool et un agent mouillant choisi parmi les sels d'acides gras supérieurs, de sulfates ou sulfonates d'alkyle ou d'aryle, de sulfates d'alcool gras, de phosphates d'alkyle, d'éthoxylates d'alcool gras, d'éthoxylates d'alkylphénol, d'éthoxylates d'amine grasse, d'éthoxylates d'acide gras, de liaisons d'alkylammonium ou de sulfonates d'alkylbenzole.

9. Solution de liant selon la revendication 8, **caractérisée en ce qu'**elle contient l'agent mouillant dans une quantité de 5 à 20 % en poids, relativement à la résine phénolique.

10. Solution de liant selon les revendications 8 et 9, **caractérisée en ce qu'**elle contient un produit de condensation du phénol et du formaldéhyde dans un rapport molaire de 1 : 3,1 à 1 : 3,6 en tant que résine phénolique.

11. Solution de liant selon les revendications 8 à 10, **caractérisée en ce que** la résine phénolique est modifiée avec de l'urée.

12. Produits fibreux hydrorétenteurs fabriqués selon un procédé de l'une ou plusieurs des revendications 1 à 7.
